# EUROPEAN PATENT APPLICATION

(11) **EP 2 803 394 A2**
(43) Date of publication of application: **19.11.2014**
(21) Application number: 14168189.0
(22) Date of filing: 13.05.2014
(51) Int. Cl.: A63B 55/08, B62B 5/00, B62D 5/04

(54) **Wheel assembly for a golf trolley**

(30) Priority: 13.05.2013 GB 201308501
(71) Applicant: Stewart Golf Limited, Kings Stanley, Gloucestershire GL10 3HG (GB)
(72) Inventor: Stewart, Mark, Gloucestershire GL10 3HG (GB); Funnell, David, Gloucestershire GL10 3HG (GB); Stewart, Duncan, Gloucestershire GL10 3HG (GB); Stewart-Miller, Jon, Gloucestershire GL10 3HG (GB)
(74) Representative: Games, Robert Harland

(57) **Abstract**

A wheel assembly 10 for a golf trolley (30) comprises a wheel 12, a motor for driving the wheel, a battery 20 for powering the motor, detection means for detecting whether or not the wheel 12 is rotating, a control unit 22 for controlling the motor and releasable connection means 24 for releasably connecting the wheel assembly 10 to a golf trolley (30), the control unit 22 having at least a first mode of operation in which the motor can be activated only when the wheel 12 is already rotating.

## Description

The present invention relates to a wheel assembly for a golf trolley.

### BACKGROUND TO THE INVENTION

Golf trolleys which can be pushed manually around a golf course are typically of a three-wheeled design, with a pair of rear wheels and a single front wheel. A base support frame is provided between the front and rear wheels, and an upright support frame extends upwardly from a point near the rear of the base support frame. A golf bag is typically rested on the front of the frame and leans rearwardly, over the rear wheels, the top of the golf bag being supported on the upright support frame. A handle extends upwardly and rearwardly from the upright support frame and the golf trolley is pushed from the rear by the handle.

Three-wheeled manual golf trolleys as described above may be foldable and may be stored compactly. However, many golf players find it difficult to push a golf bag on a trolley around a long and/or hilly course manually, and prefer a powered device.

Powered golf trolleys are known, and are typically driven by an electric motor powered by a rechargeable battery. However, the batteries must be large, heavy and expensive in order to provide enough stored energy to power a golf trolley around a golf course. This results in a golf trolley which is large and unwieldy, and will not fold up as compactly as a manual trolley. The large battery also takes some time to charge.

Since the useful lifespan of a battery is limited to a number of charging cycles, powered golf trolleys have a significant ongoing cost of ownership as well as being expensive to purchase in the first place.

A powered golf trolley typically has driven rear wheels. This requires either an axle between the two rear wheels, or a motor on each of the two rear wheels. An axle between the two rear wheels makes for a trolley which will not fold compactly, and a requirement for two motors increases the purchase cost of the trolley. Driving only one of the rear wheels makes the trolley difficult to steer.

A driven front wheel is an alternative, solving the problems with rear wheel drive mentioned above. However, the centre of mass of the loaded golf trolley is typically some way rearward of the front wheels, and a driven front wheel will therefore tend to spin due to insufficient traction with the ground.

It is an object of the invention to reduce or substantially obviate the above mentioned problems.

### STATEMENT OF INVENTION

According to a first aspect of the present invention, there is provided a wheel assembly for a golf trolley comprising a wheel, a motor for driving the wheel, and a battery for powering the motor;
detection means for detecting whether or not the wheel is rotating, and a control unit for controlling the motor, the control unit having at least a first mode of operation in which the motor can be activated only when the wheel is already rotating;
a user input means for positioning on a handle of the golf trolley, the user input means being wirelessly connected to the control unit;
and releasable connection means for releasably connecting the wheel assembly to a golf trolley.

The wheel assembly when attached to a golf trolley provides for a 'power assisted' vehicle. Because the motor can be activated only when the wheel is already rotating, the power required by the motor will be small compared with the power which would be required to move the golf trolley from a standing start. This in turn means that the battery can be small, lightweight and inexpensive when compared with the batteries which are required for fully powered golf trolleys.

A golf trolley with the wheel assembly attached is lightweight and easy to handle. The golf trolley is power assisted which improves the ease with which it can be pushed around a golf course. The battery can be charged quickly and the trolley may be folded for storage.

It will be understood that the control unit may have further modes of operation. For example, a second mode of operation may be provided in which the motor is activated whenever a button is pressed by a user. However, this second mode of operation will swiftly result in depletion of the battery due to the high power required by the motor to accelerate the vehicle from a standstill. It is therefore preferred to provide a control unit which operates only in accordance with the first mode of operation described above. Nevertheless, even with a flat battery, because of the lightweight nature of the wheel assembly, the golf trolley can be pushed with relative ease, unlike existing powered golf trolleys with a flat battery.

The control unit in the first mode of operation may automatically activate the motor when the detection means detects that the wheel is rotating.

Automatic activation provides for an effortless user experience. Pushing the trolley is easy because power assistance is automatically provided once the trolley is being pushed.

The control unit in the first mode of operation may automatically activate the motor when the detection means detects that the wheel is rotating faster than a predetermined speed. This further serves to preserve battery life, by ensuring that the motor is not activated in order to accelerate the golf trolley. Rather, the motor helps to maintain the trolley at a constant speed, assisted by the manual effort of the user. The predetermined speed may be 2mph (0.89m/s).

The control unit in the first mode of operation may activate the motor only when the detection means detects that the wheel is rotating and the user input means is activated. The user input means may be a pushbutton.

Providing a pushbutton or other input means allows the user to decide when he wishes to activate the power assistance on his golf trolley. For example, the trolley may be pushed manually on flat parts of the golf course, or for the first part of a round of golf. When the user becomes tired towards the end of the game, or when he is pushing the trolley up hills, power assistance may be desired and may be activated. Nevertheless, the control unit will only activate the motor when requested to do so by the user input means and when the wheel is already rotating. The battery life is thus conserved, because the motor is not powered when the golf trolley is accelerating from a standstill, and the motor is also not powered when the user is content to push the trolley himself.

Wireless communication of the pushbutton with the control unit for the motor is advantageous, since it allows the wheel assembly to be easily retro-fitted to a golf trolley, the wireless user input means being simply attached to a handle of the trolley, without any wiring being required. Even where the wheel assembly is sold together with the trolley as one product, it is advantageous to be able to remove the wheel assembly from the trolley so that the battery can be charged, perhaps indoors, whilst the bulk of the golf trolley is stored, possibly in a shed where an electricity supply may not be available. Providing wireless user input means as well as releasable attachment means facilitates removal of the wheel assembly from the golf trolley, since there are no wires to disconnect. This also allows the pushbutton to be attached anywhere the user desires on the handle of the golf trolley for comfortable operation.

Wireless user input means provide the further advantage that there are no wires running along the frame of the golf trolley which might become caught in trees, hedges and the like, or become fatigued due to repetitive folding of the golf trolley.

The battery may be disposed within the wheel. Providing the battery within the wheel puts the mass of the battery in the same vertical line as the driven wheel, when the golf trolley is in use. This increases the traction between the wheel and the ground, reducing the possibility that the driven wheel will spin.

Alternatively, the battery may be provided in a housing next to the wheel, substantially directly behind the wheel. Again, this puts the wheel substantially in line with the driven wheel and the weight passes substantially through the wheel. In a further alternative, the battery may be housed in the forks mounting the front wheel. In this way, the battery is balanced across the wheel, and the centre of gravity of the battery may still pass through the wheel.

The releasable connection means may include a connecting member for introduction into a socket on the golf trolley. The connecting member may include a recess for engaging with a locking device on the socket of the golf trolley. A releasable connection means as described is quick and easy to connect and remove, but provides for secure attachment of the wheel assembly to the golf trolley. The locking device may include a large handle for locking and unlocking. A large handle is advantageous, since it can easily be operated by a user whose fingers have become cold after a long period outdoors.

In use, the wheel may be substantially in front of the connecting member and socket, so that the golf trolley is pushed in a direction substantially in-line with the connecting member and socket.

According to a second aspect of the invention, there is provided a golf trolley comprising a frame mounting two rear wheels, a front wheel, and a handle;
a motor for driving the front wheel, a battery for powering the motor, detection means for detecting whether or not the front wheel is rotating, and a control unit for controlling the motor;
the control unit having at least a first mode of operation in which the motor can be activated only when the front wheel is already rotating,
a user input means positioned on a handle of the golf trolley, and the user input means being wirelessly connected to the control unit.

Advantageously, the front wheel is the driven wheel. The rear wheels may be unpowered. This means that an axle is not required between the rear wheels, resulting in a golf trolley which is easily foldable into a compact unit for storage or carriage. As with the wheel assembly described above, the control unit prevents power from being supplied to the motor until manual effort has been applied to the golf trolley to initially accelerate it from a standstill. As well as ensuring a useful battery life from a small battery, this overcomes the problem that a driven front wheel will tend to spin due to an inadequate downward force provided by the mass of the golf trolley. Because the wheel is only powered when it is already moving, power will only be applied when the trolley is being pushed from behind. The forward force applied by the user pushing the trolley forwards will transmit through the frame of the golf trolley, tending to pivot the golf trolley forward on the rear wheels, and thus pushing the front wheel into the ground, ensuring that the front wheel finds traction. In this way, a power assisted golf trolley is made to work effectively with a powered front wheel.

The control unit in the first mode of operation may automatically activate the motor when the detection means detects that the front wheel is rotating. The control unit in the first mode of operation may automatically activate the motor when the detection means detects that the front wheel is rotating faster than a predetermined speed. The predetermined speed may be 2mph (0.89m/s).

The control unit in the first mode of operation may activate the motor only when the detection means detects that the front wheel is rotating and the user input means is activated. The user input means may be a pushbutton. The pushbutton may be mounted in any convenient location on the handle of the golf trolley.

The battery may be disposed substantially in-line vertically with the front wheel. The battery may be disposed within the front wheel. The battery may be disposed in forks on either side of the wheel. The forks may mount the wheel.

The front wheel may be part of a front wheel assembly which includes at least the front wheel, the motor, and the battery, the front wheel assembly being detachable from the golf trolley.

The frame may include a base support frame provided between the front and rear wheels and an upright support frame extending from the rear of the base support frame. The base support frame and the upright support frame may be provided with means for supporting a bag of golf clubs. The frame may be foldable.

Where the battery is disposed substantially in-line vertically with the front wheel, the mass of the battery serves to push the front wheel downwardly towards the ground. This further reduces the possibility that the front wheel will spin when it is powered.

### DESCRIPTION OF THE DRAWINGS

For a better understanding of the present invention, and to show more clearly how it may be carried into effect, reference will now be made by way of example only to the accompanying drawings, in which:
Figure 1 shows a perspective view of a wheel assembly in accordance with the first aspect of the invention; and
Figure 2 shows a perspective view of a golf trolley in accordance with the second aspect of the invention.

### DESCRIPTION OF PREFERRED EMBODIMENT

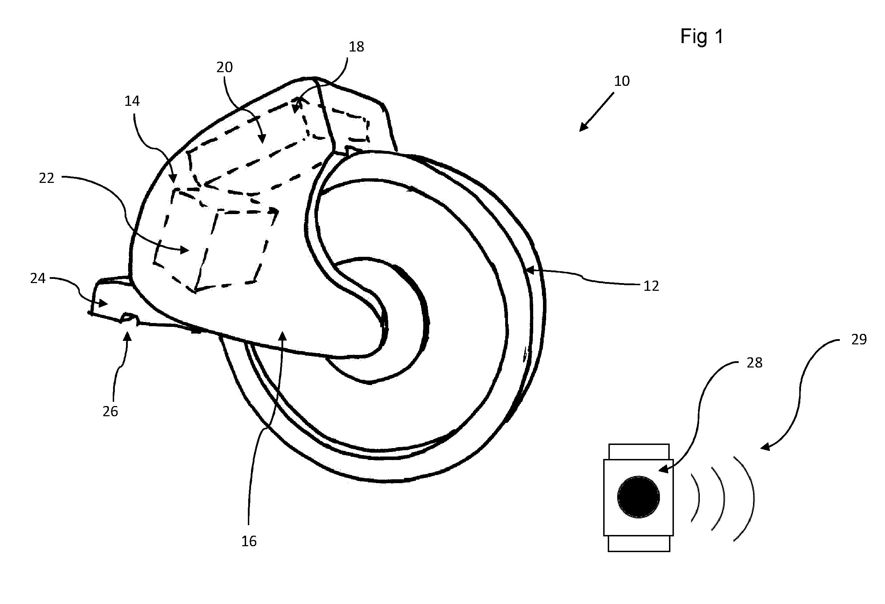

Referring firstly to Figure 1, a wheel assembly for a golf trolley is indicated generally at 10. The wheel assembly includes a wheel 12 and a wheel mounting 14.

The wheel mounting 14 includes a pair of planar side members 16, extending from a housing 18. The wheel 12 is mounted on a bearing between the two side members 16, and the housing passes over and around the wheel 12. A battery 20 and a control unit 22 are disposed within the housing 18, and a motor is provided to drive the wheel 12. The battery 12 may be a Lithium-Ion battery, which provides an excellent power to weight ratio. It is found that a Lithium-Ion battery weighing around 300g is suitable to provide enough power for power assistance around a typical 18-hole golf course.

A connecting member 24 extends from the rear of the wheel mounting 14, and is in the form of a box section. The connecting member 24 includes a recess 26 in one surface, for receiving a bolt of a locking device.

The control unit 22 includes wireless receiving means for receiving a signal from a wireless pushbutton control 28, with wireless communication indicated at 29. In use, the control unit will activate the motor to drive the wheel 12 only when a signal is received from the wireless pushbutton control 28 and when the control unit 22 detects that the wheel is already rotating at a speed of at least 2mph (0.89m/s).

The speed of rotation of the wheel may be detected by Hall-effect sensors in the motor. Alternatively, any other suitable detection means may be used.

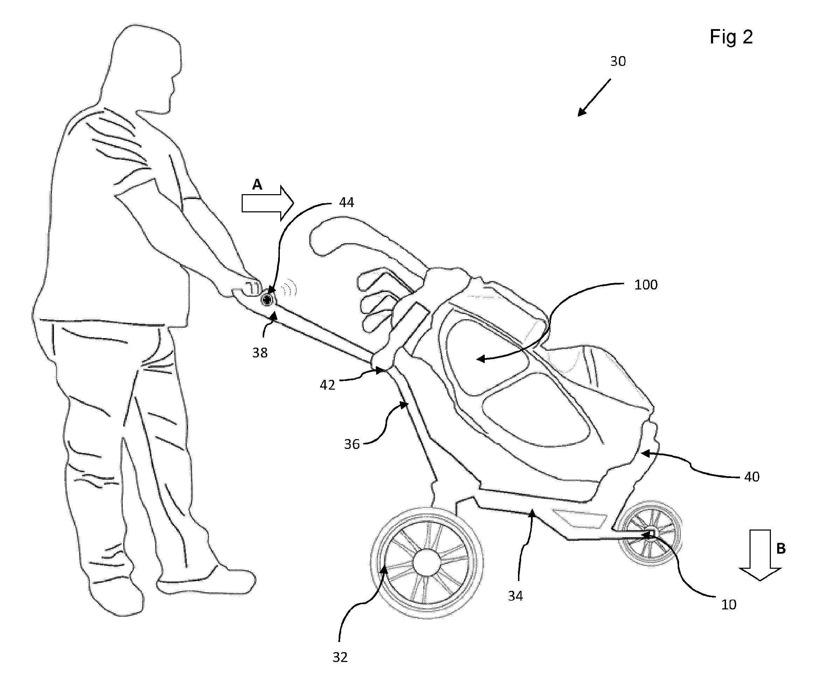

Referring now to Figure 2, a golf trolley is indicated generally at 30. The golf trolley incorporates the wheel assembly 10 as a front wheel. The golf trolley 30 further includes a pair of rear wheels 32, a base support frame 34 connecting the front and rear wheels, and an upright support frame 36 having a handle 38.

A lower jaw 40 is provided on the front of the base support frame 34, and an upper jaw 42 is provided on the upright support frame 36. In use, the base of a golf bag 100 may be introduced into and grasped within the lower jaw 40. The golf bag may then be rested against the upright support frame 36 and held within the upper jaw 42.

A socket is provided at the front of the base support frame 34, for accepting the connecting member 24 of the wheel assembly 10. The socket includes a locking mechanism having a handle and a cam. The handle is movable in-line with the socket, in the direction in which the connecting member is introduced and removed. Moving the handle operates the cam which acts against a pin, which locates in the recess 26, moving it between a locked position and an unlocked position. The cam, when in the locked position, holds the pin in the recess and the connecting member in the socket. In the unlocked position, the pin comes out of the recess, allowing unobstructed movement of the connecting member 24 within the socket.

The above-described locking arrangement is easy to operate, especially where a large handle is provided. A simple push or pull is enough to release or engage the locking mechanism. This is advantageous, since users attempting to operate the locking mechanism will often have cold hands following a long round of golf.

In use, the wheel assembly 10 is connected to the base support frame 34, creating a three-wheeled golf trolley 30. The golf trolley is intended to be pushed forwards from the handle 38, as indicated by arrow A. As well as propelling the golf trolley forwards, the force is transmitted through the frame of the trolley, pivoting the trolley clockwise as shown in Figure 2 about the rear wheels 32. This results in the front wheel being pushed downwardly, into the ground, as indicated by arrow B, improving the traction of the trolley.

The wireless pushbutton remote control 44 is mounted to the handle 38 of the trolley. When the user requires power assistance, the button 44 is pushed. The control unit 22 will power the motor to drive the wheel 12 only when the button 44 is being pushed and when the wheel 12 is already rotating at a speed of greater than 2mph (0.89m/s) in a forward direction, i.e. in the direction of arrow A.

The power assisted golf trolley is easy for a golfer to push around a golf course without becoming tired. It is lightweight and easy to store, similar to existing manual golf trolleys. The battery is small, lightweight, and charges quickly. The wheel assembly can be removed from the golf trolley for charging.

The embodiment described above is provided by way of example only, and various changes and modifications will be apparent to persons skilled in the art without departing from the scope of the present invention as defined by the appended claims.

## Claims

1. A wheel assembly for a golf trolley comprising a wheel, a motor for driving the wheel, a battery for powering the motor;
detection means for detecting whether or not the wheel is rotating, and a control unit for controlling the motor, the control unit having at least a first mode of operation in which the motor can be activated only when the wheel is already rotating;
a user input means for positioning on a handle of the golf trolley, the user input means being wirelessly connected to the control unit;
and releasable connection means for releasably connecting the wheel assembly to a golf trolley.

2. A wheel assembly as claimed in claim 1, in which the control unit in the first mode of operation activates the motor only when the detection means detects that the wheel is rotating and the user input means is activated.

3. A wheel assembly as claimed in claim 1 or 2, in which the user input means is a pushbutton.

4. A wheel assembly as claimed in any one of claims 1 to 3, in which the control unit in the first mode of operation activates the motor only when the detection means detects that the wheel is rotating faster than a predetermined speed.

5. A wheel assembly as claimed in claim 4, in which the predetermined speed is 2mph (0.89m/s).

6. A wheel assembly as claimed in any of the preceding claims, in which the weight of the battery substantially passes through the front wheel.

7. A golf trolley comprising a frame mounting two rear wheels, a front wheel, and a handle;
a motor for driving the front wheel, a battery for powering the motor, detection means for detecting whether or not the front wheel is rotating, and a control unit for controlling the motor;
the control unit having at least a first mode of operation in which the motor can be activated only when the front wheel is already rotating,
a user input means positioned on a handle of the golf trolley, and the user input means being wirelessly connected to the control unit.

8. A golf trolley as claimed in claim 7, in which the control unit in the first mode of operation automatically activates the motor when the detection means detects that the front wheel is rotating.

9. A golf trolley as claimed in claim 7 or 8, in which the control unit in the first mode of operation automatically activates the motor when the detection means detects that the front wheel is rotating faster than a predetermined speed.

10. A golf trolley as claimed in claim 9, in which the predetermined speed is 2mph (0.89m/s).

11. A golf trolley as claimed in any one of claims 7 to 10, in which the control unit in the first mode of operation activates the motor only when the detection means detects that the front wheel is rotating and the user input means is activated.

12. A golf trolley as claimed in any one of claims 7 to 11, in which the user input means is a pushbutton.

13. A golf trolley as claimed in any one of claims 7 to 12, in which the weight of the battery substantially passes through the front wheel.

14. A golf trolley as claimed in any one of claims 7 to 13, in which the front wheel is part of a front wheel assembly which includes at least the front wheel, the motor, and the battery, the front wheel assembly being detachable from the golf trolley.

15. A golf trolley as claimed in any one of claims 7 to 14, in which the frame includes a base support frame provided between the front and rear wheels and an upright support frame extending from the rear of the base support frame; the base support frame and the upright support frame being provided with means for supporting a bag of golf clubs and the frame being foldable.
